# EUROPEAN PATENT APPLICATION

(11) **EP 4 531 149 A1**
(43) Date of publication of application: **02.04.2025**
(21) Application number: 23912771.5
(22) Date of filing: 21.12.2023
(51) Int. Cl.: H01M 10/04, B32B 41/00, B32B 39/00

(54) **APPARATUS AND METHOD FOR INSPECTING ELECTRODE LAMINATION IN SECONDARY BATTERY**

(30) Priority: 26.12.2022 KR 20220184173
(71) Applicant: LG Energy Solution, Ltd., Seoul 07335 (KR)
(72) Inventor: YOON, Se Hyun, Daejeon 34122 (KR); KIM, Nam Young, Daejeon 34122 (KR); KIM, Yong Nam, Daejeon 34122 (KR); KIM, Jong Seok, Daejeon 34122 (KR); LEE, Haksoo, Daejeon 34122 (KR); CHOI, Jongkwan, Daejeon 34122 (KR)
(74) Representative: Goddar, Heinz J.
(86) International application number: PCT/KR2023/021243
(87) International publication number: WO 2024/144096

(57) **Abstract**

The present invention relates to an apparatus for inspecting stacking of electrodes of a secondary battery, the apparatus including: a stack table on which a stack including a plurality of positive electrodes and negative electrodes and a separator arranged between the positive electrodes and the negative electrodes is placed; a fixing part configured to fix one surface of the stack and including at least one hole for exposing the stack; and an imaging unit configured to capture the stack exposed through the hole.

## Description

### [Technical Field]

The present application claims priority to and the benefit of Korean Patent Application No. 10-2022-0184173 filed in the Korean Intellectual Property Office on December 26, 2022, the entire contents of which are incorporated herein by reference.

The present invention relates to an apparatus and a method for inspecting stacking of electrodes of a secondary battery.

### [Background Art]

In general, a secondary battery refers to a battery that is chargeable and dischargeable unlike a primary battery that is not chargeable, and the secondary battery is widely used in the field of high-tech electronic devices such as a phone, a laptop computer and a camcorder.

The stability of the secondary battery may be secured by a test for stability in which one surface is compressed with a press to measure an internal short.

Depending on a shape of a battery case, the secondary battery is classified into a cylindrical battery and a prismatic battery in which an electrode assembly is embedded in a cylindrical or prismatic metal battery case, and a pouch-type battery in which an electrode assembly is embedded in a pouch-type battery case made of an aluminum stack sheet.

The pouch-type battery is made by heating and pressurizing a stack of a positive electrode, a separator, and a negative electrode to adhere the positive electrode and negative electrode to the separator. The pouch-type battery has a problem in that the stack is distorted or misaligned due to not being fixed when pressurizing the stack, so after pressurizing the stack, the quality of the electrode assembly is inspected to check whether the electrodes are stacked in the normal order and alignment.

However, according to the quality inspection of the pouch-type battery in the related art, the quality of the electrode assembly is inspected after the manufacturing of the electrode assembly is completed. Therefore, if there is a defect in the alignment or order of the electrodes, the electrode assembly is discarded, resulting in great economic loss.

In addition, the quality inspection of the pouch-type battery in the related art has a problem in that it is not possible to detect defects such as misalignment of electrode plates and lifting of stacking during an electrode stacking process.

### [Detailed Description of the Invention]

### [Technical Problem]

The present invention has been made in an effort to solve the above-described problems in the related art, and is to provide an apparatus and a method for inspecting stacking of electrodes of a secondary battery, which inspect alignment of electrodes and lifting of a separator and electrodes during an electrode assembly manufacturing process.

### [Technical Solution]

An exemplary embodiment of the present invention provides an apparatus for inspecting stacking of electrodes of a secondary battery, the apparatus including: a stack table on which a stack including a plurality of positive electrodes and negative electrodes and a separator arranged between the positive electrodes and the negative electrodes is placed; a fixing part configured to fix the stack and including at least one hole for exposing the stack; and an imaging unit configured to capture the stack exposed through the hole.

Another exemplary embodiment of the present invention provides a method for inspecting stacking of electrodes of a secondary battery, the method including: manufacturing a stack by supplying a plurality of positive electrodes and negative electrodes to a stack table and supplying a separator between the positive electrodes and the negative electrodes; fixing the stack in a stacking direction using a fixing part including at least one hole for exposing the stack; and capturing the stack exposed through the hole.

### [Advantageous Effects]

In the apparatus and method for inspecting stacking of electrodes of a secondary battery according to the exemplary embodiments of the present invention, the fixing part with a hole for exposing an end portion of an electrode assembly fixes the electrode assembly when inspecting alignment of the electrodes. As a result, it is possible to minimize lifting of the separator and the electrodes.

### [Brief Description of Drawings]

FIG. 1 is a plan view showing a plane on which a fixing part according to an exemplary embodiment of the present invention fixes a stack.
FIG. 2 is a cross-sectional view taken along line A-A' of FIG. 1.
FIG. 3 is a plan view showing the fixing part according to the exemplary embodiment of the present invention.
FIG. 4 is a cross-sectional view showing an electrode assembly manufacturing apparatus according to an exemplary embodiment of the present invention.
FIG. 5 is a perspective view showing a separator supply unit according to an exemplary embodiment of the present invention.
FIG. 6 shows fitted line graphs for an nₓth distance of each electrode of a stack measured in a Comparative Example and an nₓth distance actually measured on a cut cross-section of the stack.
FIG. 7 shows fitted line graphs for an nₓth distance of each electrode of a stack measured in an Example and an nₓth distance actually measured on a cut cross-section of the stack.
FIG. 8 shows fitted line graphs for an n_{y}th distance of each electrode of a stack measured in the Example and an n_{y}th distance actually measured on a cut cross-section of the stack.

### <Explanation of Reference Numerals and Symbols>

100: apparatus for inspecting stacking of electrodes of secondary battery
200: electrode assembly manufacturing apparatus
10: stack table
20: fixing part
21: first hole
22: second hole
30: imaging unit
40: determination unit
50: separator supply unit
51: separator heating unit
52: separator roll
61: first electrode seating table
62: first suction head
63: first electrode roll
64: first cutter
65: first conveyor belt
66: first electrode supply head
67: first moving part
71: second electrode seating table
72: second suction head
73: second electrode roll
74: second cutter
75: second conveyor belt
76: second electrode supply head
77: second moving part
1: first electrode
2: second electrode
4: separator
S: stack
s1: first end portion
s2: second end portion
s3: third end portion
s4: fourth end portion

### [Best Mode]

The detailed description of the present invention is intended to completely explain the present invention to one skilled in the art. Throughout the specification, unless explicitly described to the contrary, when one component "comprises (includes)" another component or "is characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

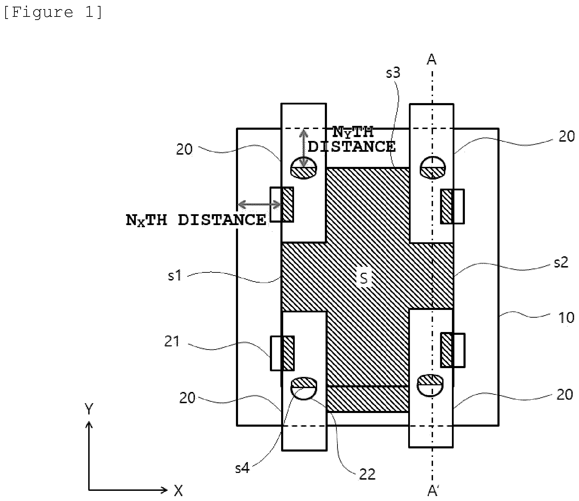

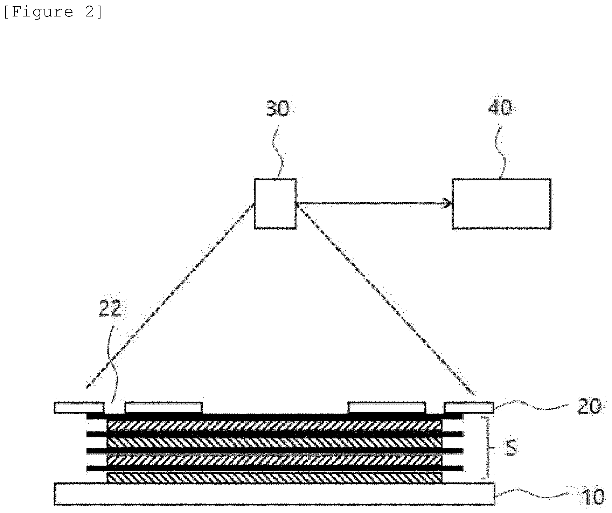

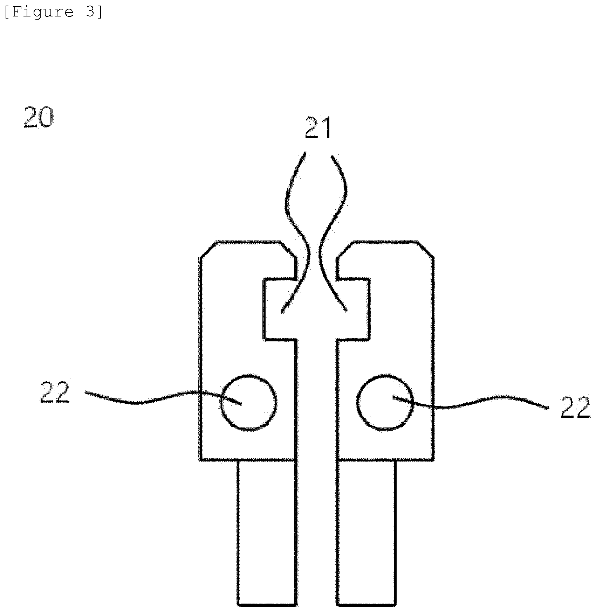

FIG. 1 is a plan view showing a plane on which a fixing part 20 according to an exemplary embodiment of the present invention fixes a stack, FIG. 2 is a cross-sectional view taken along line A-A' of FIG. 1, and FIG. 3 is a plan view showing the fixing part 20 according to the exemplary embodiment of the present invention.

An apparatus 100 for inspecting stacking of electrodes of a secondary battery according to an exemplary embodiment of the present invention includes a stack table 10, a fixing part 20, and an imaging unit 30.

On the stack table 10, a positive electrode, a negative electrode, and a separator are supplied and stacked, and a stack is manufactured and placed. For example, a stack in which a plurality of positive electrodes and negative electrodes are stacked on a zigzag-shaped separator is placed. Here, the stack S refers to a stack in which a separator, a positive electrode, and a negative electrode are simply stacked, and an electrode assembly refers to one in which the separator and the positive electrode and the negative electrode are attached or adhered therebetween by heating and pressing the stack S.

In addition, the stack S of the present invention refers to one before the separator and the positive electrode and the negative electrode are attached, and the number of stacks of the positive electrode and negative electrode may vary.

An electrode assembly is a power generating element that includes a positive electrode, a negative electrode, and a separator located between the positive electrode and the negative electrode and can be charged and discharged.

The electrode assembly may include a stack-and-folding structure in which a negative electrode and a positive electrode are stacked in order between folds of the separator supplied in a zigzag shape.

The positive electrode may include a positive electrode current collector, a positive electrode active material portion, and a positive electrode uncoated portion. The positive electrode current collector is a metal thin plate with excellent conductivity and may include, for example, an aluminum (Al) foil.

The positive electrode is coated with a positive electrode active material on one or more of both surfaces of the positive electrode current collector. A region coated with the positive electrode active material is a positive electrode active material portion, and a region not coated with the positive electrode active material is a positive electrode uncoated portion. Since the positive electrode uncoated portion is not applied with the positive electrode active material layer, a first electrode tab can be joined thereto.

The positive electrode active material may include a lithium cobalt oxide with a high operating voltage and excellent capacity characteristics, a lithium nickel oxide with a high reversible capacity and used to easily implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode may include a negative electrode current collector, a negative electrode active material portion, and a negative electrode uncoated portion. The negative electrode current collector may include a metal thin plate with excellent conductivity, for example, a copper (Cu) or nickel (Ni) foil.

The negative electrode is coated with a negative electrode active material on one surface or both surfaces of the negative electrode current collector. The negative electrode active material portion is formed by coating or applying the negative electrode active material, and the negative electrode uncoated portion is a region where the negative electrode active material is not coated or applied and the negative electrode current collector is exposed. Since the negative electrode uncoated portion is not applied with the negative electrode active material, a second electrode tab can be joined thereto.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The first electrode tab and the second electrode tab serve to transfer electrons collected in the current collectors to an external circuit, and may protrude in opposite directions with respect to the electrode assembly of the jelly-roll structure.

The separator prevents an internal short circuit that may be generated when the positive electrode and the negative electrode come into contact with each other, and may include a porous material to facilitate migration of ions between the electrodes.

In an exemplary embodiment, the separator may include a base material layer made of a porous material. The base material layer may include, for example, any one selected from the group consisting of polyethylene (PE), polystyrene (PS), polypropylene (PP), and a copolymer of polyethylene (PE) and polypropylene (PP).

In another exemplary embodiment, the separator may include a safety reinforced separator (SRS). That is, the separator may include a base material layer made of a porous material and a coating layer coated and formed on the base material layer by applying mixed slurry of inorganic particles and a binder polymer. Preferably, the coating layer includes ceramic particles and has a uniform pore structure formed by an interstitial volume between the ceramic particles that are a component of an active layer, in addition to a pore structure of the separator base material itself.

The coating layer may include ceramic particles including at least one selected from the group consisting of alumina, silica, TiO₂, SiC, and MgAl₂O₄. Such a coating layer is included, so that the safety of the electrode assembly can be enhanced. The coating layer may further include a lithium salt.

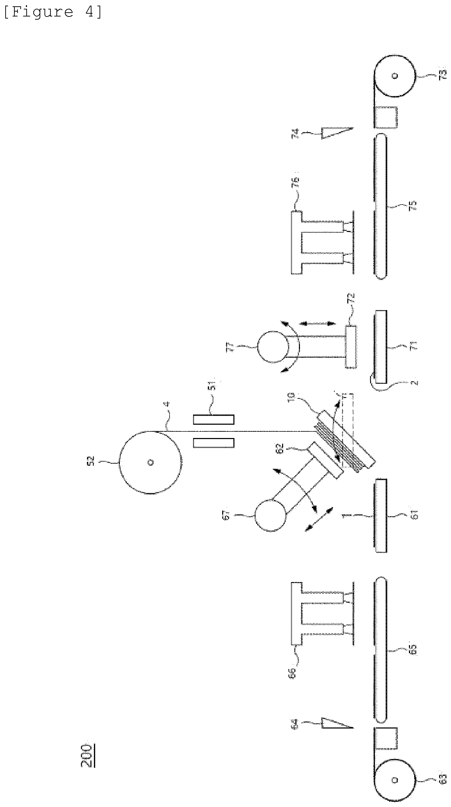

The apparatus 100 for inspecting stacking of electrodes of a secondary battery according to an exemplary embodiment of the present invention may be included in an electrode assembly manufacturing apparatus. FIG. 4 is a cross-sectional view showing an electrode assembly manufacturing apparatus 200 according to an exemplary embodiment of the present invention. The electrode assembly manufacturing apparatus 200 includes a stack table 10, a separator supply unit 50, a first electrode supply unit, a second electrode supply unit, and a press unit (not shown). Accordingly, the stack table 10 of the apparatus 100 for inspecting stacking of electrodes of a secondary battery may be the same as the stack table 10 of the electrode assembly manufacturing apparatus.

The stack table 10 is one on which a first electrode 1, a separator 4, and a second electrode 2 are alternately stacked on one side and the stacked stack S is placed on one side, and the separator 4 is folded in a zigzag shape, and the first electrode 1, the separator 4, and the second electrode 2 may be stacked such that the first electrode 1 and the second electrode 2 are alternately arranged between folds of the separator 4. Here, the first electrode 1 and the second electrode 2 may include a positive electrode and a negative electrode. For example, when the first electrode 1 is a positive electrode, the second electrode 2 may be a negative electrode, and when the first electrode 1 is a negative electrode, the second electrode 2 may be a positive electrode.

On the stack table 10, the first electrode 1 and the second electrode 2 supplied to the stack table 10 through rotation can be stacked. Accordingly, the electrode assembly manufacturing apparatus 200 according to an exemplary embodiment of the present invention may further include a rotation unit (not shown) for rotating the stack table 10.

In the electrode assembly manufacturing apparatus 200 according to an exemplary embodiment of the present invention, a first electrode supply unit may be located on one side of the stack table 10, and a second electrode supply unit may be located on the other side. In this case, the rotation unit may alternately rotate the stack table 10 in a direction of the first electrode supply unit and a direction of the second electrode supply unit.

For example, a separator supply unit 50 may located above the stack table 10, that is, in a stacking direction of the stack S, and the first electrode supply unit is located on the left side and the second electrode supply unit may be located on the right side based on the stacking direction of the stack S.

When the separator 4 is supplied and placed on the stack table 10, and the rotation unit rotates the stack table leftward, the first electrode may be supplied to one surface of the separator 4. Along with supplying the separator 4, the rotation unit may rotate the stack table 10 rightward. In this case, the separator 4 may cover lower, right, and upper surfaces of the first electrode 1, and the second electrode 2 may be supplied to an upper surface of the first electrode 1 where the separator 4 is located.

By repeating the above process, the separator 4 can be provided in such a form that the left and right sides are alternately open for each layer.

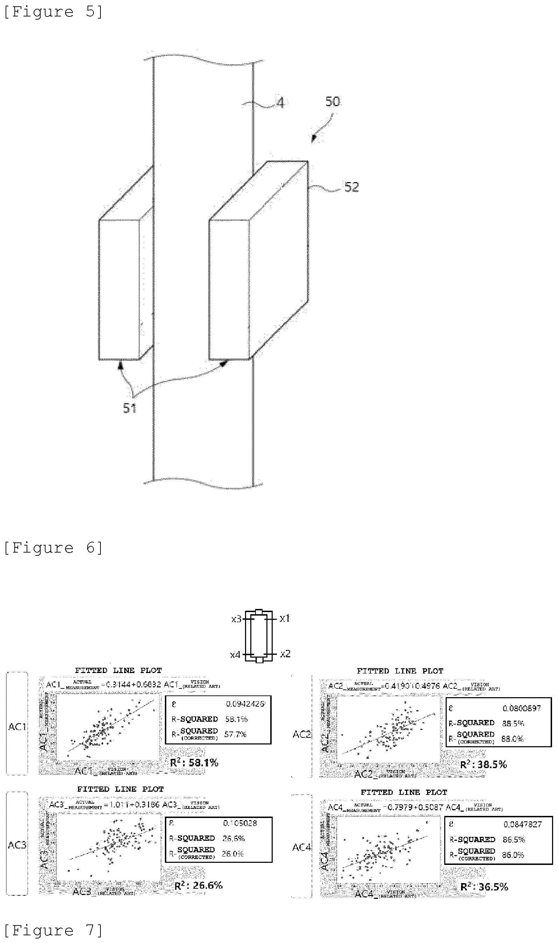

FIG. 5 is a perspective view showing the separator supply unit 50 according to an exemplary embodiment of the present invention. The separator supply unit 50 may include separator heating units 51 that form a passage through which the separator 4 passes and heats the separator 4 passing therethrough.

The separator heating unit 51 may include a pair of bodies (not shown) and a separator heater (not shown) that heats the bodies. The pair of bodies may be located at a certain distance apart from each other so that the separator 4 can pass therethrough. Here, the separator 4 may pass through the separator heating unit 71 in a non-contact manner, for example, so that the separator 4 can be heated in a non-contact manner. Note that the bodies may be formed in a shape of, for example, a square block.

Note that the separator supply unit 50 may further include a separator roll 52 on which the separator 4 is wound. Here, the separator 4 wound on the separator roll 52 may be supplied to the stack table 10 while being gradually unwound and passing through the separator heating unit 51.

For example, the separator supply unit 50 may be located above the stack table 10. The separator supply unit 50 may further include a separator roll 52 on which the separator 4 is wound. Here, the separator 4 wound on the separator roll 52 may be supplied to the stack table 10 by gravity while being gradually unwound.

The first electrode supply unit may supply the first electrode 1 to the stack table 10 and stack the first electrode 1 on the stack table 10.

The first electrode supply unit may include a first electrode seating table 61 on which the first electrode 1 is seated before being stacked on the stack table 10.

The first electrode supply unit may further include a first electrode roll 63, a first cutter 64, a first conveyor belt 65, and a first electrode supply head 66.

In the first electrode supply unit, the first electrode 1 wound in a form of a sheet on the first electrode roll 63 can be supplied to the first electrode seating table 61 while being gradually unwound, and the first cutter 64 can cut the first electrode 1 supplied from the first electrode roll 63 to a preset length.

The first electrode 1 cut by the first cutter 64 is supplied to the first conveyor belt 65, and the first conveyor belt 65 may move the first electrode 1 to the first electrode seating table 61 side. The first electrode supply head 66 may vacuum-adsorb the first electrode 1 placed on the first conveyor belt 65 and seat the same on the first electrode seating table 61.

Here, the first cutter 64 may cut the sheet-like first electrode 1 so that a first electrode tab 1a is formed to protrude at an end portion.

Furthermore, the first electrode supply unit may include a first suction head 62 and a first moving part 67.

The first suction head 62 can vacuum-suction the first electrode 1 seated on the first electrode seating table 61. The first suction head 62 has a vacuum suction port (not shown) formed in a bottom surface, and can suction the first electrode 1 through the vacuum suction port to fix the first electrode 1 to the bottom surface of the first suction head 62. Here, the first suction head 62 may be formed therein with a passage connecting the vacuum suction port and a vacuum suction device (not shown).

The first moving part 67 can move the first suction head 62 to the stack table 10 so that the first suction head 62 can stack the first electrode 1 seated on the first electrode seating table 61 on the stack table 10.

The second electrode supply unit may supply the second electrode 2 to the stack table 10 and stack the second electrode 2 on the stack table 10.

The second electrode supply unit may include a second electrode seating table 71 on which the second electrode 2 is seated before being stacked on the stack table 10.

The second electrode supply unit may further include a second electrode roll 73 on which the second electrode 2 is wound in the form of a sheet, a second cutter 74 that cuts the second electrode 2 at regular intervals to form second electrodes 2 with a predetermined size when the second electrode 2 in the form of a sheet wound on the second electrode roll 73 is unwound and supplied, a second conveyor belt 75 that moves the second electrodes 2 cut by the second cutter 74, and a second electrode supply head 76 that vacuum-adsorbs the second electrodes 12 being conveyed by the second conveyor belt 75 to seat the same on the second electrode seating table 71.

Here, the second cutter 74 may cut the sheet-like second electrode 2 so that a second electrode tab 2a is formed to protrude at an end portion.

Furthermore, the second electrode supply unit may include a second suction head 72 that vacuum-suctions the second electrode 2 seated on the second electrode seating table 71 and a second moving part 77 that can move the second suction head 72 to the stack table 10 so that the second suction head 72 can stack the second electrode 2 seated on the second electrode seating table 71 on the stack table 10.

The second suction head 72 may include a vacuum suction port (not shown) formed in a bottom surface on which the second electrode 2 is seated and configured to suck air and fix the second electrode 2 to the bottom surface of the second suction head 72.

In this case, the rotation unit according to an exemplary embodiment of the present invention may rotate the stack table 10 so that the stack table 10 faces the first suction head 62 when stacking the first electrode 1, and rotate the stack table 10 so that the stack table 10 faces the second suction head 72 when stacking the second electrode 2.

The fixing part 20 fixes the stack S and includes at least one hole 21, 22 for exposing the stack S. The fixing part 20 can fix the stack S by pressing the same on one side in the stacking direction of the stack S.

Referring to FIGS. 1 and 3, the fixing part 20 may include a first hole 21 for exposing a line along which the separator 4 is folded and a second hole 22 for exposing a line orthogonal to the line along which the separator 4 is folded.

The stack S according to an exemplary embodiment of the present invention may include two long sides, which are side surfaces or end portions where the separator is folded, and two short sides, which are side surfaces or end portions which are orthogonal to the long sides and from which electrode tabs protrude.

In an exemplary embodiment, the separator 4 or the stack S stacked on the stack table 10 has a first end portion, a second end portion facing the first end portion, and a third end portion and a fourth end portion connecting the first end portion and the second end portion.

The first hole 21 of the fixing part 20 may expose a first end portion s1 or a second end portion s2, which are the long sides of the stack S, and the second hole 22 may expose a third end portion s3 or a fourth end portion s4, which are the short sides of the stack S.

The fixing part 20 may be provided in plural. The fixing part 20 may extend in a longitudinal direction of the stack S to fix the stack S. Additionally, two of the fixing parts 20 may be provided as a pair.

One fixing part 20 of the pair of fixing parts 20 may extend in the longitudinal direction of the stack S from the third end portion s3, and the other fixing part 20 may extend in the longitudinal direction of the stack S from the fourth end portion s4. The pair of fixing parts 20 may be spaced apart from each other.

The fixing part 20 may be included in two pairs. One pair of fixing parts 20 may be located adjacent to the first end portion s1, and the other pair of fixing parts 20 may be located adjacent to the second end portion s2. Alternatively, one pair of fixing parts 20 may have one end portions located on the same line as the first end portion s1, and the other pair of fixing parts 20 may have one end portions located on the same line as the second end portion s2.

The shape of the first hole 21 is not limited as long as it can expose the line along which the separator is folded, but may be, for example, a square or rectangular shape. The shape of the second hole 22 is not limited as long as it can expose the line orthogonal to the line along which the separator is folded, but may be, for example, a circular shape.

The imaging unit 30 can capture the stack S exposed through the holes 21 and 22 and the stack table, and the apparatus 100 for inspecting stacking of electrodes of a secondary battery according to an exemplary embodiment of the present invention may further include a determination unit 40 that receives data captured by the imaging unit 30 and analyzes the positions of the positive electrode, negative electrode, and separator 4 to determine misalignment of the positive electrode, negative electrode, and separator 4.

The imaging unit 30 may capture the first hole 21 and the second hole 22, respectively, together with the stack table, or capture the first hole 21, the second hole 22, and the stack table together. In addition, the imaging unit 30 may capture the first hole 21 and the second hole 22 each time the separator 4 is stacked on one surface of each of the plurality of positive electrodes and negative electrodes to check alignment of the positive electrode, negative electrode, and separator of each layer.

The determination unit 40 measures a distance between the first end portion s1 or second end portion s2 of the separator located in the first hole 21 and an end portion of the stack table 10 parallel to the first end portion s1 or second end portion s2.

Alternatively, the determination unit 40 measures a distance between the third end portion s3 or fourth end portion s4 of the separator located in the second hole 22 and an end portion of the stack table 10 parallel to the third end portion s3 or fourth end portion s4.

Alternatively, the determination unit 40 measures both the distance between the first end portion s1 or second end portion s2 and the end portion of the stack table 10 parallel to the first end portion s1 or second end portion s2 and the distance between the third end portion s3 or fourth end portion s4 and the end portion of the stack table 10 parallel to the third end portion s3 or fourth end portion s4.

In an exemplary embodiment, the apparatus 100 for inspecting stacking of electrodes of a secondary battery includes fixing parts 20 of which two are provided as a pair, and a first pair of fixing parts 20 is located adjacent to the first end portion s1 to fix the negative electrode and the separator, and a second pair of fixing parts 20 is located adjacent to the second end portion s2 to fix the positive electrode and the separator.

After stacking of the negative electrode, stacking of the separator, and folding, the first pair of fixing parts 20 fixes the stack S, and the imaging unit 30 captures the first and second holes 21 and 22 formed in the first pair of fixing parts 20. Then, the determination unit 40 receives the image captured by the imaging unit 30 and measures a distance between the first end portion s1 captured together with the first hole 21 and an end portion of the stack table parallel to the first end portion s1 on the captured image. Then, the determination unit 40 measures a distance between the third end portion s3 captured together with the second hole and an end portion of the stack table parallel to the third end portion s3.

The determination unit 40 may check alignment of the positive electrode, negative electrode, or separator 4 by comparing the measured distance between the separator 4 and the end portion of the stack table with a pre-stored reference value.

A distance between the first end portion s1 or second end portion s2 exposed through the first hole 21 of the fixing part 20 fixing an nth stacked positive electrode and separator 4 or negative electrode and separator 4 and the end portion of the stack table is an nₓth distance, and a distance between the first end portion s1 or second end portion s2 exposed through the first hole 21 of the fixing part 20 fixing an (n+1)th stacked positive electrode and separator 4 or negative electrode and separator 4 and the end portion of the stack table is an (n+1)ₓth distance.

A distance between the third end portion s3 or fourth end portion s4 exposed through the second hole 21 of the fixing part 20 fixing an nth stacked positive electrode and separator 4 or negative electrode and separator 4 and the end portion of the stack table is an n_{y}th distance, and a distance between the third end portion s3 or fourth end portion s4 exposed through the second hole 21 of the fixing part 20 fixing an (n+1)th stacked positive electrode and separator 4 or negative electrode and separator 4 and the end portion of the stack table is an (n+1)_{y}th distance.

The determination unit 40 can check alignment of the positive electrode, negative electrode, or separator 4 by comparing the nₓth distance, (n+1)ₓth distance, n_{y}th distance and (n+1)_{y}th distance with pre-stored reference values. Specifically, when a difference between the nₓth distance and the (n+1)ₓth distance or a difference between the n_{y}th distance and the (n+1)_{y}th distance is equal to or less than a reference value, the determination unit 40 may determine the alignment as normal, and when the difference between the n_{y}th distance and the (n+1)ₓth distance or the difference between the n_{y}th distance and the (n+1)_{y}th distance exceeds the reference value, the determination unit 40 may determine the alignment as being misaligned.

Alternatively, when the nₓth distance and the n_{y}th distance are equal to or less than the pre-stored reference values, the determination unit 40 may determine the alignment as normal, and when the distances exceed the reference values, the determination unit 40 may determine the alignment as being misaligned. That is, the pre-stored reference value may be a distance between the first end portion s1 or second end portion s2 and the end portion of the stack table, or an error value of a normal range of a difference between the nₓth distance and the (n+1)ₓth distance or a difference between the n_{y}th distance and the (n+1)_{y}th distance.

In an exemplary embodiment, when the reference value is the distance between the end portion of the positive electrode, negative electrode, or separator 4 and the end portion of the stack table, the reference value for the nₓth distance may be 5 mm or less. Preferably, the reference value for the nₓth distance may be 3 mm or less, and more preferably 2 mm or less. The reference value for the n_{y}th distance may be 10 mm or less. Preferably, the reference value for the n_{y}th distance may be 6 mm or less, and more preferably 4 mm or less.

When one or more of the nₓth distance and the n_{y}th distance measured by the determination unit 40 exceed the reference value, the determination unit 40 may determine the alignment of the electrode and the separator as being misaligned.

The apparatus 100 for inspecting stacking of electrodes of a secondary battery according to an exemplary embodiment of the present invention may further include a control unit (not shown). The control unit can control the fixing part 20, the imaging unit 30, the stack table, and the like.

For example, the control unit can control the fixing and unfixing of the fixing part 20 for the stack S and can control the imaging position of the imaging unit 30.

When the apparatus 100 for inspecting stacking of electrodes of a secondary battery according to an exemplary embodiment of the present invention is included in the electrode assembly manufacturing apparatus, the electrode assembly manufacturing apparatus may further include an electrode realignment unit (not shown).

When the determination unit 40 determines that the stacking of electrodes is defective, the electrode realignment unit may re-stack the electrode determined as being defective. In an exemplary embodiment, the control unit may release fixing of the fixing part 20 for the stack S and move the stack table to the electrode realignment unit. Alternatively, the control unit may move the electrode realignment unit to the stack table to re-stack the electrode.

A method for inspecting stacking of electrodes of a secondary battery includes a stack manufacturing step (S10) of supplying a plurality of positive electrodes and negative electrodes to a stack table and supplying a separator between the positive electrodes and the negative electrodes to manufacture the stack, a stack fixing step (S20) of fixing the stack in a stacking direction using a fixing part including at least one hole for exposing the stack, and a capturing step (S30) of capturing the stack exposed through the hole.

In the stack fixing step (S20), the stack may be fixed each time the separator is stacked on one surface of the positive electrode or negative electrode after the positive electrode or negative electrode is supplied to the stack table.

In the capturing step (S30), the hole of the fixing part and the stack table may be captured. In this case, the hole may include a first hole for exposing a line where the separator is folded and a second hole for exposing a line orthogonal to the line where the separator is folded.

In the capturing step (S30), the first hole and the stack table, and the second hole and the stack table may be captured, separately, or the first hole, the second hole, and the stack table may all be captured at once.

The method for inspecting stacking of electrodes of a secondary battery further includes a determination step (S40) of determining whether the stacking of the positive electrode, negative electrode, and separator is defective, based on data captured in the capturing step (S30).

In the determination step (S40), a distance between a first end portion or second end portion of the separator located in the first hole and an end portion of the stack table parallel to the first end portion or second end portion is measured, or a distance between a third end portion or fourth end portion of the separator located in the second hole and an end portion of the stack table parallel to the third end portion or fourth end portion is measured. Alternatively, in the determination step (S40), the distance between the first end portion or second end portion and the end portion of the stack table parallel to the first end portion or second end portion and the distance between the third end portion or fourth end portion and the end portion of the stack table parallel to the third end portion or fourth end portion are measured.

In the determination step (S40), the nₓth distance, which is the distance between the first end portion or second end portion of the nth stacked separator and the end portion of the stack table, and the pre-stored reference value may be compared to determine whether misalignment of the negative electrode, the positive electrode, and the separator, or the n_{y}th distance, which is the distance between the third end portion or fourth end portion of the nth stacked separator and the end portion of the stack table, and the pre-stored reference value may be compared to determine whether misalignment of the negative electrode, the positive electrode, and the separator.

The method for inspecting stacking of electrodes of a secondary battery can refer to the description of the apparatus for inspecting stacking of electrodes of a secondary battery.

Although the present invention has been described with reference to preferred exemplary embodiments, it will be understood by one skilled in the art that various modifications and variations can be made to the present invention without departing from the technical spirit and scope of the present invention.

### Mode for Invention

### [Comparative Examples]

In the Comparative Example, an apparatus and a method for inspecting stacking of electrodes of a secondary battery of the related art are used, and the fixing part included in the apparatus for inspecting stacking of electrodes of a secondary battery does not include a hole. In the method for inspecting stacking of electrodes of a secondary battery, after stacking electrodes and a separator, four corners of a stack are fixed using the four fixing parts. Before capturing a stacked state of the electrodes with the imaging unit, the fixing by the fixing part is released and the stack is captured. The determination unit measures the nₓth distance and the n_{y}th distance using the image captured by the imaging unit, compares the distances with the reference values, and determines whether the stacking of the electrodes is defective.

### [Examples]

In the Example, the apparatus and method for inspecting stacking of electrodes of a secondary battery according to an exemplary embodiment of the present invention is used to determine whether the stacking of the electrodes is defective.

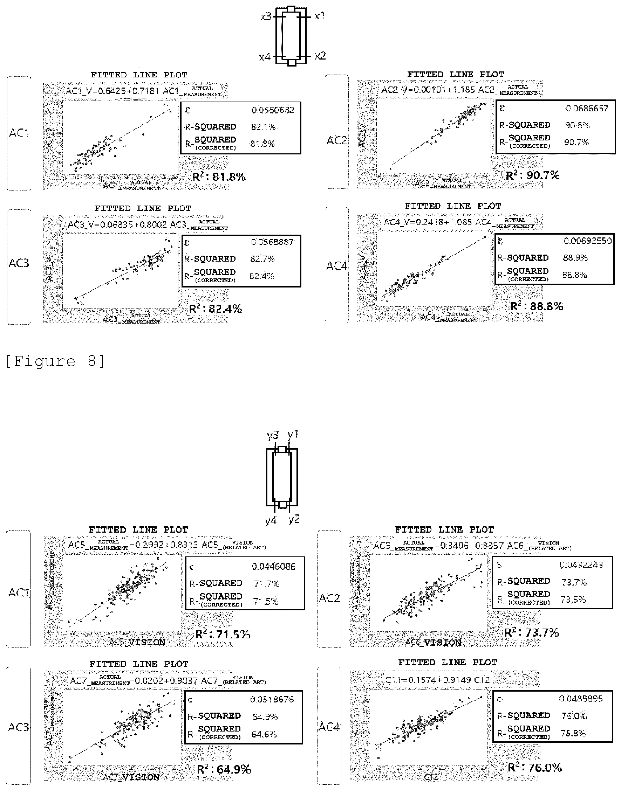

FIG. 6 shows fitted line graphs for an nₓth distance of each electrode of a stack measured in the Comparative Example and an nₓth distance actually measured on a cut cross-section of the stack, FIG. 7 shows fitted line graphs for an nₓth distance of each electrode of a stack measured in an Example and an nₓth distance actually measured on a cut cross-section of the stack, and FIG. 8 shows fitted line graphs for an n_{y}th distance of each electrode of a stack measured in the Example and an n_{y}th distance actually measured on a cut cross-section of the stack.

The nₓth distance was measured at two locations adjacent to the electrode tab at each of the first end portion and the second end portion. The nₓth distance measurement positions are referred to as x1, x2, x3, and x4 in the order of the upper right, lower right, upper left, and lower left of the stack shown in FIGS. 6 and 7. The n_{y}th distance was measured at two locations at each of the third end portion and the fourth end portion, and is referred to as y1, y2, y3, and y4 in the order of the upper right, lower right, upper left, and lower left of the stack shown in FIG. 8.

The fitted line graphs in FIGS. 6 and 7 were created by plotting the nₓth distance measured by the imaging unit and the determination unit on the x-axis and the n_{y}th distance actually measured by cutting a cross-section of the stack on the y-axis. Then, a regression equation was calculated through linear regression analysis using the above variables. The calculated regression equation was different for each location, and the regression equation was written on the graph for each location. The R squared value (R²), which indicates the reliability of the regression equation, was also written on the graph for each location.

Referring to FIG. 6, in the Comparative Example, it can be seen that the distribution of the nₓth distances with respect to the nₓth distances measured by the determination unit is spread widely around the fitted line. That is, the reliability of the fitted line of the Comparative Example, in other words, the R squared value (R²) of the Comparative Example is less than 60%, indicating low reliability.

Referring to FIGS. 7 and 8, in the Example, it can be seen that the R squared value (R²) is over 64%, indicating that the reliability of the fitted line is high. That is, it can be confirmed that the nₓth distances and n_{y}th distances measured through the holes after fixing the stack with the fixing part are similar to the nₓth distance and n_{y}th distance values actually measured and are reliable.

**[Table 1]**

| | Location | X1 (AC1) | X2 (AC2) | X3 (AC3) | X4 (AC4) |
|---|---|---|---|---|---|
| | Spec (mm) | 1.25±0. 8 | | | |
| Cross-section measurement (actual measurement) | Average (mm) | 1.38 | 1.52 | 1.37 | 1.23 |
| | Standard deviation (mm) | 0.16 | 0.18 | 0.15 | 0.18 |
| | 4σ (mm) | ±0.65 | ±0.72 | ±0.62 | ±0.72 |
| | Cp | 1.64 | 1.48 | 1.73 | 1.49 |
| | Cpk | 1.37 | 0.98 | 1.46 | 1.46 |
| Vision measurement | Average (mm) | 1.64 | 1.82 | 1.17 | 1.07 |
| | Standard deviation (mm) | 0.13 | 0.18 | 0.14 | 0.17 |
| | 4σ (mm) | ±0.52 | ±0.73 | ±0.54 | ±0.68 |
| | Cp | 2.06 | 1.45 | 1.96 | 1.57 |
| | Cpk | 1.07 | 0.41 | 1.76 | 1.22 |

**[Table 2]**

| | Location | Y1 (AC5) | Y2 (AC6) | Y3 (AC7) | Y4 (AC8) |
|---|---|---|---|---|---|
| | Spec (mm) | 2.2±0.8 | | 3.9±0.8 | |
| Cross-section measurement (actual measurement) | Average (mm) | 3.40 | 2.14 | 3.29 | 2.17 |
| | Standard deviation (mm) | 0.08 | 0.08 | 0.09 | 0.09 |
| | 4σ (mm) | ±0.33 | ±0.34 | ±0.35 | ±0.36 |
| | Cp | 3.19 | 3.18 | 3.06 | 2.99 |
| | Cpk | -1.58 | 0.14 | -1.12 | -3.48 |
| Vision measurement | Average (mm) | 3.37 | 2.03 | 3.62 | 2.20 |
| | Standard deviation (mm) | 0.09 | 0.08 | 0.08 | 0.08 |
| | 4σ (mm) | ±0.34 | ±0.33 | ±0.31 | ±0.34 |
| | Cp | 3.13 | 3.28 | 3.43 | 3.14 |
| | Cpk | -2.84 | -0.30 | 2.67 | -3.53 |

Tables 1 and 2 above show the average, the standard deviation (σ), and the capability of process (Cp, Cpk) of the nₓth distance and n_{y}th distance measured using the apparatus for inspecting stacking of electrodes of a secondary battery according to an exemplary embodiment of the present invention and the nₓth distance and n_{y}th distance actually measured by cutting a cross-section of a stack.

Cp (Capability of Process) refers to how much the population measurement results between the upper and lower limits are dispersed from the median. In Tables 1 and 2, the upper and lower limits of Cp refer to the highest and lowest values of the nₓth distances and n_{y}th distances (x-axis) of each layer. The median refers to the y-axis value (number of measurements of the center value) of the center value (average) of the x-axis. When the Cp value exceeds 1, it means that the population measurement results are concentrated at the median.

Cpk (Capability of Process Katayori) refers to the degree of deviation from the median. That is, Cpk refers to the degree to which the median deviates toward the upper or lower limit.

Referring to Table 1 and Table 2, it can be seen that the nₓth distances and n_{y}th distances measured (vision measurement) using the apparatus for inspecting stacking of electrodes of a secondary battery according to an exemplary embodiment of the present invention are similar to the nₓth distances and n_{y}th distances actually measured through a cross-section of a stack.

In addition, it can be seen that the standard deviation and Cpk values are low and Cp is high, so the nₓth distances and the n_{y}th distances are concentrated around the standard value.

## Claims

1. An apparatus for inspecting stacking of electrodes of a secondary battery, the apparatus comprising:
a stack table on which a stack comprising a plurality of positive electrodes and negative electrodes and a separator arranged between the positive electrodes and the negative electrodes is placed;
a fixing part configured to fix one surface of the stack and comprising at least one hole for exposing the stack; and
an imaging unit configured to capture the stack exposed through the hole.

2. The apparatus of claim 1, wherein the imaging unit is configured to perform capturing each time each of the plurality of positive electrodes and negative electrodes is stacked.

3. The apparatus of claim 1, wherein the separator comprises a first end portion, a second end portion facing the first end portion, and a third end portion and a fourth end portion connecting the first end portion and the second end portion, and
wherein the fixing part comprises a first hole for exposing the first end portion or the second end portion and a second hole for exposing the third end portion or the fourth end portion.

4. The apparatus of claim 3, wherein the imaging unit is configured to capture the first hole, the second hole, and the stack table.

5. The apparatus of claim 3, further comprising a determination unit configured to receive data captured by the imaging unit and analyze positions of the positive electrode, the negative electrode, and the separator to determine whether misalignment of the positive electrode, the negative electrode, and the separator.

6. The apparatus of claim 5, wherein the determination unit is configured to measure a distance between the first end portion or the second end portion of the separator exposed through the first hole and an end portion of the stack table parallel to the first end portion or the second end portion.

7. The apparatus of claim 6, wherein the determination unit is configured to determine whether misalignment of the negative electrode, the positive electrode, and the separator by comparing an nₓth distance, which is a distance between the first end portion or the second end portion of the nth stacked separator and the end portion of the stack table, with a pre-stored reference value.

8. The apparatus of claim 5, wherein the determination unit is configured to measure a distance between the third end portion or the fourth end portion of the separator exposed through the second hole and an end portion of the stack table parallel to the third end portion or the fourth end portion.

9. The apparatus of claim 8, wherein the determination unit is configured to determine whether misalignment of the negative electrode, the positive electrode, and the separator by comparing an n_{y}th distance, which is a distance between the third end portion or the fourth end portion of the nth stacked separator and the end portion of the stack table, with a pre-stored reference value.

10. The apparatus of claim 1, wherein the fixing part is provided in plural, and two of the fixing parts are located as a pair along a longitudinal direction of the stack.

11. The apparatus of claim 10, wherein the fixing parts comprise two pairs of fixing parts, and the two pairs of fixing parts alternately fix the stack.

12. A method for inspecting stacking of electrodes of a secondary battery, the method comprising:
manufacturing a stack by supplying a plurality of positive electrodes and negative electrodes to a stack table and supplying a separator between the positive electrodes and the negative electrodes;
fixing the stack in a stacking direction using a fixing part comprising at least one hole for exposing the stack; and
capturing the stack exposed through the hole.

13. The method of claim 12, wherein in the fixing the stack and the capturing, the stack is fixed and the hole of the fixing part and the stack table are captured each time the separator is supplied to one surface of each of the positive electrodes and the negative electrodes.

14. The method of claim 12, wherein the separator comprises a first end portion, a second end portion facing the first end portion, and a third end portion and a fourth end portion connecting the first end portion and the second end portion, and
wherein in the fixing, the fixing part comprises a first hole for exposing the first end portion or the second end portion and a second hole for exposing the third end portion or the fourth end portion.

15. The method of claim 14, wherein the capturing comprises capturing the first hole, the second hole, and the stack table.

16. The method of claim 14, further comprising determining misalignment of the positive electrode, the negative electrode, and the separator by analyzing positions of the positive electrode, the negative electrode, and the separator through the captured data.

17. The method of claim 16, wherein in the determining, a distance between the first end portion or the second end portion of the separator exposed through the first hole and an end portion of the stack table parallel to the first end portion or the second end portion is measured.

18. The method of claim 17, wherein in the determining, whether misalignment of the negative electrode, the positive electrode, and the separator is determined by comparing an nₓth distance, which is a distance between the first end portion or the second end portion of the nth stacked separator and the end portion of the stack table, with a pre-stored reference value.

19. The method of claim 16, wherein in the determining, a distance between the third end portion or the fourth end portion of the separator exposed through the second hole and an end portion of the stack table parallel to the third end portion or the fourth end portion is measured.

20. The method of claim 19, wherein in the determining, whether misalignment of the negative electrode, the positive electrode, and the separator is determined by comparing an n_{y}th distance, which is a distance between the third end portion or the fourth end portion of the nth stacked separator and the end portion of the stack table, with a pre-stored reference value.
